# EUROPÄISCHE PATENTSCHRIFT

(11) **EP 0 612 961 B1**
(45) Veröffentlichungstag und Bekanntmachung des Hinweises auf die Patenterteilung: **29.04.1998**
(21) Anmeldenummer: 94101503.4
(22) Anmeldetag: 02.02.1994
(51) Int. Cl.: F23N 5/00, G01N 21/00, F23N 5/08, F23M 11/04, G01N 21/72, G01J 5/60

(54) **Verfahren zur Ermittlung charakteristischer Eigenschaften von Radikale bildenden Prozessen**
Method for determining characteristic properties of processes producing radicals
Procédé de détermination de propriétés caractéristiques de processus formant des radicaux

(30) Priorität: 24.02.1993 DE 4305645
(43) Veröffentlichungstag der Anmeldung: 31.08.1994
(73) Patentinhaber: RWE Entsorgung Aktiengesellschaft, 45128 Essen (DE)
(72) Erfinder: Wintrich, Franz, Dipl.-Ing., D-45309 Essen (DE); Kaiser, Dieter, Dipl.-Ing., D-44357 Dortmund (DE); Eisenloher, Holger, Dr., D-42579 Heiligenhaus (DE); Mindermann, Kurt-Henry, Dr., D-40883 Ratingen (DE)

(56) Entgegenhaltungen:
- EP-A- 0 119 724
- EP-A- 0 317 731
- EP-A- 0 334 027
- WO-A-94/08228
- DE-A- 4 028 922
- DE-U- 9 011 973
- FR-A- 2 675 901
- GB-A- 2 079 927
- GB-A- 2 188 416
- GB-A- 2 204 428
- US-A- 4 616 137
- APPLIED PHYSICS B PHOTOPHYSICS AND LASER CHEMISTRY., Bd. B53, Nr. 4, Oktober 1991 BERLIN, DE, Seiten 260-264, XP 000268079 P. KAURANEN ET AL.

## Beschreibung

Die vorliegende Erfindung betrifft ein Verfahren zur Ermittlung charakteristischer Eigenschaften von Radikale bildenden Prozessen.

Radikalbildung tritt bei einer Vielzahl von thermischen und/oder chemischen Umwandlungen auf, wie z. B. bei der Verbrennung fossiler Brennstoffe, wie Stein- oder Braunkohle, Schweröl, Erdgas, der Verbrennung von Klärschlamm, Müll oder Sondermüll, der Vergasung kohlenstoffhaltiger Materialien oder auch bei anderen chemischen und/oder thermischen Prozessen.

Zur Steuerung von derartigen Prozesse umfassender Verfahren werden charakteristische Eigenschaften des jeweiligen Prozesses erfaßt und dann im allgemeinen entsprechend ausgewertet, um z. B. Führungsgrößen für eine Prozeßregelung insbesondere im Hinblick auf die NOₓ-Bildung und Dioxin- und Dibenzofuranbildung zu bilden. Die erfaßten charakteristischen Eigenschaften können dabei direkt und/oder indirekt, d. h. z. B. nach Berechnung einer Kennzahl Führungsgrößen bilden.

Zur Ermittlung der Temperatur, als eine charakteristische Eigenschaft sind verschiedene Methoden bekannt. Bei einem mit einem Absaugpyrometer arbeitenden Verfahren wird beispielsweise eine gekühlte Lanze durch eine Schauluke eines Reaktors in einem Reaktionsraum gehalten und die Temperatur einer abgesaugten Gasmenge bestimmt. Hierbei wird trotz eines hohen Meßaufwands lediglich eine einzige lokale Temperatur bestimmt, wobei die Ermittlung zudem mit Fehlern behaftet ist, da ein Einführen der Lanze selbst einen Einfluß auf das Meßergebnis hat. Ferner ist bei diesem Verfahren nur eine nachträgliche Beurteilung der lokal nur ungenau zuzuordnenden Temperatur im Reaktionsraum möglich und die Lanze hohen thermischen Beanspruchungen und Verschleiß ausgesetzt.

Es sind auch berührungslose Verfahren zur Ermittlung der Temperatur von chemischen und/oder thermischen Prozessen bekannt. Zur berührungslosen Ermittlung der Temperatur in einem Feuerraum eines Kohlekraftwerks wurde vorgeschlagen, eine Vielzahl von akkustischen Quelle-Detektoreinheiten in einer Ebene außenseitig an einer den Feuerraum umgebenden Wandung anzuordnen. Bei diesem Verfahren sendet eine Quelle-Detektoreinheit ein kurzzeitiges akustisches Signal, etwa einen Knall, aus, das von den jeweils anderen Quelle-Detektoreinheiten empfangen wird, Das Aussenden und Empfangen von akustischen Signalen wird dann zyklisch vertauscht bis jede Einheit einmal gesendet hat und die jeweils anderen entsprechend oft empfangen haben. Anhand unterschiedlicher Geschwindigkeiten der Schallfortpflanzung durch den Feuerraum wird auf eine jeweilige Dichte von Verbrennungsgasen und dann auf deren Temperatur geschlossen. Nachteilig bei diesen Verfahren ist, daß nur Temperaturmittelwerte ermittelt werden, da von den Quelle-Detektoreinheiten erregte Schallwellen zum Teil den gesamten Feuerraum durchlaufen, in dem jedoch keine homogene, sondern eine heterogene Temperaturverteilung herrscht und dementsprechend Bereiche unterschiedlicher Dichte von Verbrennungsgasen. Zudem behindern Staub- und Strähnenbildung eine genaue Temperaturermittlung.

Auch die Ermittlung von bei Verbrennungsvorgängen entstehenden Radikalen zur Steuerung von Müllverbrennungsvorgängen ist gemäß EP-A-0 317 731 bekannt.

In der GB-A-2204 428 wird die Erfassung von Emissionsintensitäten von Radikalen, wie C₂, CH und OH im Verbrennungsraum offenbart. Die spektralen Emissionen aus der Primärzone einer Brennerflamme werden mittels zweier Photodioden gemessen, wobei eine den Bereich 509 bis 519 nm und die andere von 423 nm bis 433 nm mißt.

In "Applied Physics B: Photophysics and Laser Chemistry, B 53 (1991) October, No. 4, 260 - 264, Springer Verlag 1991, Berlin, DE, wird die gleichzeitige Erfassung der Spektren mehrerer Radikale beschrieben. Die gleichzeitige Erfassung zahlreicher lokaler, räumlicher Bereiche in einem Verbrennungsraum durch 2 Detektoren ist nicht offenbart.

Aufgrund bisher unbefriedigender Meßmethoden innerhalb des Feuerraums, wie z. B. von Müllverbrennungsanlagen, stehen genaue Analysen über das Schadstoffbildungsverhalten noch immer nicht zur Verfügung.

Insbesondere ist die Erfassung lokaler Zustände bei den vorstehend genannten Umwandlungen nicht in ausreichendem Maße möglich.

Aufgabe der vorliegenden Erfindung ist es daher, ein verbessertes Verfahren zur Ermittlung charakteristischer Eigenschaften von bei hohen Temperaturen ablaufenden Prozessen zur Verfügung zu stellen.

Diese Aufgabe wird durch ein Verfahren zur Ermittlung charakteristischer Eigenschaften von Radikale bildenden Prozessen gelöst, bei dem die Strahlungsintensitäten von Banden einer Vielzahl von Radikalen erfaßt werden, dadurch gekennzeichnet, daß die Temperatur und/oder die Radikalkonzentration aufgrund der erfaßten Strahlungsintensitäten in solchen Bereichen ermittelt werden, die durch wenigstens zwei Detektoren gleichzeitig eingesehen werden, wobei aus den Bereichen entlang bestimmter Strahlungsrichtungen auf die Detektoren einfallende Strahlung zur gleichzeitigen Erfassung der Strahlungsintensitäten der Banden der Vielzahl von Radikalen spektral zerlegt und auf eine Photonen-empfindliche Erfassungsmatrix abgebildet wird, die eine der Anzahl der Strahlungsrichtungen entsprechende Anzahl von Spalten und eine zu der Feinheit der Spektralzerlegung korrespondierende Anzahl von Zeilen aufweist. Die Detektoren übermitteln die erfaßten Daten über Leitungen, zur Auswertung an eine Recheneinrichtung.

Eine Verwendung des Verfahrens ist im Anspruch 8 und eine Vorrichtung zur Durchführung des Verfahrens ist im Anspruch 9 enthalten

Dadurch, daß das Strahlungsspektrum in Radikale aufweisenden Bereichen durch wenigstens 2 Detektoren erfaßt wird, ist eine Berücksichtigung räumlich inhomogener Zustandsgrößen und kinetischer Bildungsprozesse möglich. Eine Auswertung des Strahlungssprektrums in den Bereichen gewährleistet eine genaue Ermittlung lokaler Zustandsgrößen und lokaler Bildungsprozesse. Eine Ermittlung von Temperaturen in den Bereichen und / oder der Konzentration der Radikale in den Bereichen liefert wesentliche Eigenschaften von Radikale bildenden Prozessen und Grundlagen zu deren Beurteilung und Kontrolle. Von besonderer Bedeutung ist hierbei die Kontrolle der NOₓ-Bildung. Eine Kenntnis der Temperatur und der Radikal-Konzentrationsverhältnisse in den Bereichen läßt Aussagen über lokale Prozeßabläufe zu, so daß auch gezielt lokal in den Prozeßablauf eingegriffen werden kann. Hierbei kann beispielsweise ein Eingriff durch Ansteuerung von Verbrennungsluftdüsen, Brennstoffzufuhr, Rückführen von Abgasen, Brennstoffverteilung, Temperatur der zugeführten Verbrennungsluft oder ggf. der Einspritzung von NH₃ erfolgen.

Die vorliegende Erfindung macht es möglich, durch Begrenzung der in die Detektoren einfallenden Strahlung gezielt Ausschnitte aus dem Prozeßraum zu erfassen, deren Auswertung von besonderer Bedeutung ist. Dies kann beispielsweise durch Begrenzung des Einfallswinkels etwa durch einen Schlitz erfolgen.

Ein Strahlungsspektrum kann bei thermisch bzw. chemisch angeregter Strahlung in Reaktionszonen eines Brennraums entstehen, wobei z. B. ein Brennernahfeld detektiert werden kann. Jede Gasspezies emittiert aufgrund gequantelter Energiebeiträge aus Rotation, Vibration und elektronischer Anregung bei diskreten Wellenlängen Bandenstrahlung. Bei der Verbrennung freigesetzte chemische Energie ermöglicht eine elektronische Anregung von Molekülen. Einer derartigen Anregung folgt eine spontane Emission im allgemeinen im UV-Bereich.

Sowohl Bandenstrahlung einzelner Moleküle als auch eine weitgehend bandenfreie Körperstrahlung, z. B. Partikelstrahlung von Staub, können durch die erfindungsgemäße Erfassung des Strahlungsspektrums detektiert werden, so daß mit dem angegebenen Verfahren eine genaue Konzentrationsbestimmung von Radikalen möglich wird. Des weiteren wird gleichzeitig eine spektroskopische Untersuchung des Eigenleuchtens einer Flamme und pyrometrische Bestimmung einer Flammentemperatur bei brennergestützten Prozessen ermöglicht. Durch die Auswertung des Strahlungsspektrums in den Bereichen können Störeinflüsse bei einer Detektion von Radikalen durch z. B. Ruß- und/oder Staubstrahlung festgestellt und quantifiziert werden, derart, daß die Genauigkeit einer Temperaturermittlung und einer Radikal-Konzentrationsermittlung wesentlich erhöht wird.

Ein weiterer Vorteil des Verfahrens besteht in einer zeitgleichen Erfassung von Strahlungsspektren einer Vielzahl von Bereichen, wodurch eine Ermittlung zeitgleicher, lokaler charakteristischer Eigenschaften gewährleistet ist. Durch die zeitgleiche Erfassung ist praktisch eine Momentaufnahme der Temperaturverhältnisse und Bildungsprozesse in allen Bereichen zu einem Zeitpunkt möglich.

Das Strahlungsspektrum kann einen Wellenlängenbereich umfassen, in dem Bandenstrahlung von für einen Prozeß charakteristischen Radikalen auftritt. Bei Verbrennungsvorgängen ist es zweckmäßig einen Bereich von in etwa 200 bis 520 nm zu erfassen. Für eine Ermittlung in einem Nahfeld eines Staubbrenners einer Kohlefeuerung ist z. B. ein Bereich von etwa 300 bis 480 nm geeignet, wobei in diesem Bereich unter anderem Intensitätsspitzen von C0, C₂, CN, CH, liegen.

Für eine zeitweise oder auch ständige Abgleichung, bzw. Kalibrierung der Erfassung und/oder eine Verbesserung der Auswertung des Strahlungsspektrums kann zusätzlich auch eine Erfassung einer Referenzstrahlung vorgesehen sein, die von einem in einem bestimmten Wellenlängenbereich strahlenden Referenzstrahler emittiert wird. Der Wellenlängenbereich kann dabei vorteilhaft außerhalb oder auch zwischen charakteristischer Bandenstrahlung von Radikalen liegen, was eine Auswertung bzw. Identifikation erleichtert.

Durch eine Erfassung der Referenzstrahlung werden zusätzlich Informationen zur Berücksichtigung von Störeinflüssen bei einer Detektion von Radikalen bereitgestellt, so daß z. B. genauere Aussagen über Staub- und/oder Rußbeladung ermöglicht werden. Dabei kann auch zweckmäßig sein, eine Absorption der Referenzstrahlung zu erfassen und auszuwerten.

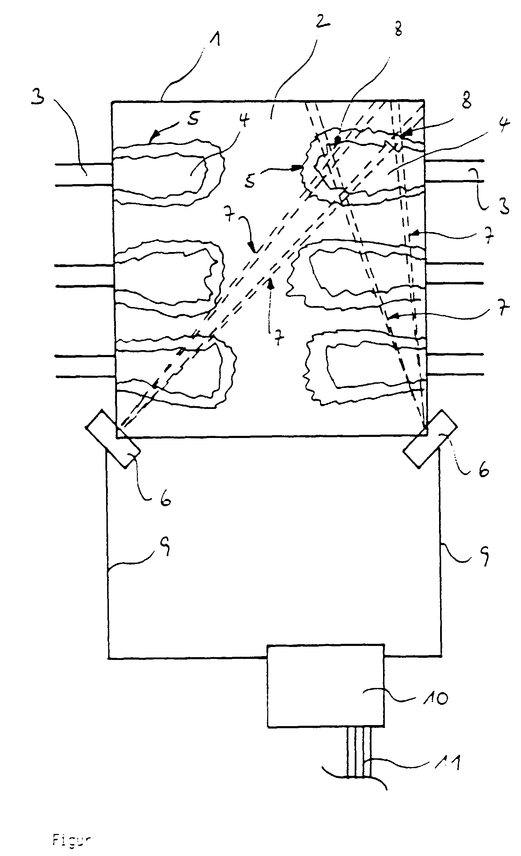

Ein Ausführungsbeispiel einer Einrichtung bei der das Verfahren gemäß der Erfindung eingesetzt wird, ist in der beigefügten Zeichnung dargestellt und wird nachstehend beschrieben.

Die Figur zeigt schematisiert einen Schnitt durch einen Brennraum einer Kohlefeuerungsanlage.

In einen von einer Wandung 1 umgebenen Brennraum 2 wird Brennstoff und Verbrennungsluft über Luftzufuhrvorrichtungen umfassende Brennereinrichtungen 3 eingeleitet und unter Bildung von Flammen 4 verbrannt. Bereiche 5, die die Flammen 4 enthalten, weisen bei einer Verbrennung entstehende Radikale auf.

An zwei benachbarten Kanten der im Schnitt im wesentlichen rechteckförmigen Wandung 1 sind zwei in Abständen voneinander angeordnete Detektoren 6 angeordnet. Jeder Detektor 6 erfaßt Strahlungsspektren bzw. -intensitäten in den Bereichen 5 entlang bestimmter in Detektorrichtung im wesentlichen fächerförmig verlaufender Strahlungsrichtungen, die jeweils Achsen von kegelförmigen Ausschnitten 7 des Brennraums 2 bilden. Die sich in Brennraum 2 kreuzenden Ausschnitte 7 erfassen die erfindungsgemäßen Bereiche 8.

Die Detektoren 6 sind über Leitungen 9 mit einer Recheneinrichtung 10 zur Auswertung der erfaßten Strahlungsspektren bzw. -intensitäten verbunden. Die Recheneinricntung 10 ist über Leitungen 11 zur Übermittlung der ermittelten Daten an weitere Steuer- und Regeleinrichtungen verbunden.

Die Detektoren 6 weisen bevorzugt einen Öffnungswinkel von im wesentlichen 90° auf, wobei der Winkel gezielt begrenzt werden kann. Je nach Art und Gestalt eines Raumes in dem die Prozesse stattfinden, können auch andere Öffungswinkel bzw. Sichtwinkel vorgesehen sein. Bei kreisförmigen Querschnitten sind größere Öffnungswinkel bevorzugt, beispielsweise in einem Bereich über 90°. Bei rechteckförmigen Querschnitten sind z. B. Öffnungs- bzw. Sichtwinkel in Bereichen von 90° und darunter zweckmäßig. Eine Sichtwinkelauflösung kann Winkelminuten bis mehrere Grad, beispielsweise auch 1° betragen. Die Detektoren können Strahlung aus allen, dem Öffnungswinkel entsprechenden Strahlungsrichtungen erfassen. Entlang einer Strahlungsrichtung einfallende Strahlung in einem Ausschnitt 7 mit einem oder mehreren erfindungsgemäßen Bereichen 8 wird nach Erfassung durch ein Gitter- oder Prismenspektrometer spektral zerlegt und auf einer Photonen-empfindlichen Erfassungsmatrix, beispielsweise einem Matrixarray oder einem CCD-Chip abgebildet, so daß simultan sämtliche Spektren in dem Ausschnitt 7 mit einem oder mehreren der erfindungsgemäßen Bereich 8 erfaßt sind.

Die Erfassungsmatrix weist bevorzugt eine den Strahlungsrichtungen entsprechende Anzahl von Spalten und eine zu der Feinheit der Spektralzerlegung korrespondierende Anzahl von Zeilen auf. Durch eine Gestaltung der Erfassungsmatrix kann auch Einfluß auf eine räumliche Auflösung der Erfassung genommen werden.

Es versteht sich natürlich, daß die erfindungsgemäßen Bereiche 8, bei entsprechender Ausbildung der Detektoren 6, insbesondere der Optikeinrichtung, beliebig verkleinert und einzelnen Punkten angenähert werden können und damit die Genauigkeit der Ermittlung erhöht werden kann.

Die Detektoren 6 erfassen im wesentlichen sich addierende Strahlungsintensitäten von als Banden ausgebildeten Wellenlängenbereichen und bandenfreier Wellenlängenbereiche, z. B. Körper- bzw. Partikelstrahlung und Bandenstrahlung von Radikalen und Molekülen, wie C₂, CH, CN, OH, NO, NH. Ein derartiges kontinuierlich erfaßtes Strahlenspektrum kann einen ansteigenden Verlauf in Richtung größerer Wellenlängen aufweisen, der in einer Überlagerung beider voneinander verschiedenen Strahlungsarten begründet ist.

Von den Detektorer 6 werden den erfaßten Strahlungsintensitäten entsprechende Signale über Leitungen 9 an die Recheneinrichtung 10 übermittelt, wobei die Signale die Strahlenspektren sich in kegelförmigen Ausschnitten 7 des Brennraumes 2 addierender Strahlungsintensitäten berücksichtigen. Hierbei enthalten die kegelförmigen Ausschnitte ein oder mehrere erfindungsgemäße Bereiche 8 die Radikale mit Bandenstrahlung aufweisen und auch von Staub- und/oder Rußpartikeln emittierte weitgehend bandenfreie Körperstrahlung.

In der Recheneinheit 10 werden die erfaßten sich addierenden Strahlungsspektren der Ausschnitte 7 tomografisch ausgewertet und Temperatur sowie Radikalkonzentration in den erfindungsgemäßen Bereichen 8 ermittelt. Bei dem für eine Rekonstruktion lokaler Werte zu lösenden Gleichungssystem ist insbesondere die Methode einer Singulärwertzerlegung vorteilhaft.

Zur Ermittlung lokaler Temperaturen werden ein oder mehrere bandenfreie Wellenlängenbereiche mit zugehörigen lokalen Intensitäten nach der Verhältnispyrometrie herangezogen. Da dies für jede Strahlungsrichtung bzw. jeden Ausschnitt 7 geschieht, entspricht dies einem n-dimensionalen Quotientenpyrometer.

In einer ersten Näherung wird die die Intensitätswerte beeinflussende Staubbeladung als in Brennraum 2 homogen verteilt angenommen und für jeden erfindungsgemäßen Bereich 8 tomografisch ein lokaler Intensitätswert errechnet. Als eine Korrekturvorgabe dient dann die Integration der errechneten Intensitätswerte entlang einer Strahlungsrichtung. Bei einer richtigen Annahme der Staubbeladung stimmt die Summe tomografisch rekonstruierter Werte mit dem jeweils erfaßten Wert überein.

Aus den, ggf. nach mehrmaliger Korrektur der Staubbeladung, ermittelten lokalen Intensitätswerten lassen sich dann durch Quotientenbildung lokale Temperaturen ermitteln. Als Randbedingung gilt hierbei, daß die für einen Ort bzw. einen erfindungsgemäßen Bereich 8 errechnete Temperatur aus verschiedenen Quotientenbildungen innerhalb einer gewissen Abweichung identisch sein muß. Ist dies nicht der Fall, so erfolgt ein lterationsschritt mit einer Korrektur der Staubbeladung.

Zur Ermittlung lokaler Konzentrationen von Radikalen werden Banden mit zugehörigen Intensitätswerten jeder Strahlungsrichtung bzw. jeden Ausschnitts 7 und die nunmehr bekannte lokale Staubbeladung herangezogen, wobei hohe Intensitätswerte bereits qualitativ auf hohe Radikalkonzentrationen hindeuten. Eine Ermittlung lokaler Radikalkonzentrationen erfolgt dann tomografisch.

Eine, ggf. aus der Temperaturermittlung bekannte Staubbelastung bietet den Vorteil, daß sich addierende Intensitäten entlang der Strahlungsrichtungen bzw. in den Ausschnitten 7 um Absorptions- und / oder Extinktionseinflüsse leicht korrigiert werden können und dann lediglich noch tomografisch Radikalkonzentrationen zu ermitteln sind. Es ist aber auch möglich, Annahmen bzw. Vorgaben der lokalen Staubbeladung zur Temperaturermittlung für die Konzentrationsermittlung zu übernehmen und beide Ermittlungsvorgänge im wesentlichen parallel ablaufen zu lassen.

Zur Überprüfung der ermittelten lokalen Werte für Temperatur und Radikalkonzentrationen, kann ein Abgleichungsschritt vorgesehen sein, wobei in einer Kopplungseinrichtung lokale Temperaturen und Bandenemission auf Plausibilität geprüft werden, da i. a. eine hohe Temperatur auf eine Reaktionszone und daher auf eine relativ hohe Radikalkonzentration hindeutet. Bei Feuerungen liegt beispielsweise tendenziell mehr CO bei niederer Temperatur und mehr NOₓ bei hoher Temperatur in Reaktionszonen vor.

Mit dem erfindungsgemäßen Verfahren lassen sich Temperatur- und / oder Konzentrationsverhältnisse auch in mehreren Ebenen von Brennräumen oder Reaktoren ermitteln, wodurch weitere räumliche Inhomogenitäten ermittelt werden können und ein noch umfassenderes Bild von Prozeßabläufen- bzw. -zuständen erhalten wird. So können z. B. weitere Detektoren, ggf. paarweise, quer und / oder parallel und / oder in anderer Anordnung zu einem ersten Detektorpaar vorgesehen werden.

Ferner ist die Erfassung und Auswertung nicht auf den UV-Wellenlängenbereich beschränkt, sondern auch bei sichtbarem Licht bis in den Infrarotbereich hinein möglich.

Das erfindungsgemäße Verfahren ist von großer technischer Bedeutung wie z. B. zu spektroskopischen Messungen in Brennräumen eines Kohlekraftwerkes,
wobei trotz großer Störeinflüsse von Ruß- und Staubstrahlung Radikale wie C₂, CH, CN und OH, detektiert werden können, die jeweils eine wichtige Rolle in der Kinetik der NOₓ-Bildung spielen. Ferner können durch das Verfahren Daten bzw. Werte von mehrdimensionalen Temperatur- und/oder Radikal-Konzentrationsfeldern ermittelt werden, die einen primärseitigen Eingriff in die Prozesse erlauben, so daß z. B. bei Feuerungen wesentliche Verringerungen von Rauchgasemissionswerten, z. B. NOₓ und CO erzielt werden können. Des weiteren ist z. B. auch eine Beteiligung einzelner Brenner an einer Schadstoffbildung, beispielsweise in einer zahlreiche Brenner umfassenden Kohlefeuerung nachvollziebar und in Brennräumen auftretende Radikale und Moleküle zusammen mit einer Temperaturverteilung und einer Rauchgasanalyse mit reaktionskinetischen Ansätzen vergleichbar. Mit dem angegebenen Verfahren lassen sich auch an NOₓ-Bildung bzw. -Abbau beteiligte Reaktionen bei Kohlestaubverbrennungen analysieren, wobei z. B. Konzentrationen der eine wesentliche Rolle spielenden zweiatomigen Radikale OH, NH, CN, CH und von NO selbst ermittelbar sind. Bei einer Müllverbrennung beispielsweise sind zudem mit Schadstoffkonzentrationen korrellierende Staubkonzentrationen ermittelbar, die einen maßgeblichen Einfluß auf z. B. die Dioxinbildung haben.

Die Erfindung ist jedoch nicht auf die genannten technischen Anwendungen beschränkt, wie bereits oben angeführt.

## Patentansprüche

1. Verfahren zur Ermittlung charakteristischer Eigenschaften von Radikale bildenden Prozessen, bei dem die Strahlungsintensitäten von Banden einer Vielzahl von Radikalen erfaßt werden, dadurch gekennzeichnet, daß die Temperatur und/oder die Radikalkonzentration aufgrund der erfaßten Strahlungsintensitäten in solchen Bereichen (8) ermittelt werden, die durch wenigstens zwei Detektoren (6) gleichzeitig eingesehen werden, wobei aus den Bereichen (8) entlang bestimmter Strahlungsrichtungen (7) auf die Detektoren (6) einfallende Strahlung zur gleichzeitigen Erfassung der Strahlungsintensitäten der Banden der Vielzahl von Radikalen spektral zerlegt und auf eine Photonen-empfindliche Erfassungsmatrix abgebildet wird, die eine der Anzahl der Strahlungsrichtungen entsprechende Anzahl von Spalten und eine zu der Feinheit der Spektralzerlegung korrespondierende Anzahl von Zeilen aufweist und wobei die Detektoren die erfaßten Daten über Leitungen zur Auswertung an eine Recheneinrichtung übermitteln.

2. Verfahren nach Anspruch 1, dadurch gekennzeichnet, daß die Strahlungsintensität auch von bandenfreien Wellenlängenbereichen erfaßt und zusammen mit den Strahlungsintensitäten der Banden ausgewertet wird.

3. Verfahren nach den Ansprüchen 1 und 2, dadurch gekennzeichnet, daß das Strahlungsspektrum mit Detektoren erfaßt wird, die einen Öffnungswinkel von im wesentlichen 90° aufweisen.

4. Verfahren nach den Ansprüchen 1 bis 3, dadurch gekennzeichnet, daß die Detektoren sich addierende Strahlungsintensitäten entlang verschiedener Strahlungsrichtungen erfassen.

5. Verfahren nach den Ansprüchen 1 bis 4, dadurch gekennzeichnet, daß das Strahlungsspektrum tomografisch ausgewertet wird.

6. Verfahren nach den Ansprüchen 1 bis 5, dadurch gekennzeichnet, daß Staub- und / oder Rußpartikelkonzentrationen innerhalb und außerhalb der Bereiche ermittelt werden.

7. Verfahren nach den Ansprüchen 1 bis 6, dadurch gekennzeichnet, daß zusätzlich die Strahlung eines Referenzstrahlers erfaßt wird.

8. Verwendung des Verfahrens nach einem der Ansprüche 1 bis 7 zur Ermittlung der Temperatur und/oder Radikalenkonzentration in einem Feuerraum oder einem Reaktor.

9. Vorrichtung zur Ermittlung charakteristischen Eigenschaften von Radikale bildenden Prozessen, bei der die Strahlungsintensitäten von Banden einer Vielzahl von Radikalen erfaßt werden, dadurch gekennzeichnet daß wenigstens zwei Detektoren (6) angeordnet sind zur Erfassung von Strahlung aus Bereichen (8), die entlang bestimmter Strahlungsrichtungen (7) durch die Detektoren gleichzeitig eingesehen werden, daß die Detektoren jeweils ein Spektrometer zur Spektralzerlegung der einfallenden Strahlung und eine Photonen-empfindliche Erfassungsmatrix aufweisen, wobei jede Erfassungsmatrix eine der Anzahl der Strahlungsrichtungen entsprechende Anzahl von Spalten und eine zu der Feinheit der Spektralzerlegung korrespondierende Anzahl von Zeilen aufweist und einer Recheneinrichtung (10) zur Ermittlung von Temperatur und/oder Konzentration der Radikale in Bereichen (8), die über Leitungen mit den Detektoren verbunden ist.

## Claims

1. A method of determining characteristic features of processes that form radicals by detecting the radiation intensity of band radiation of multiple radicals, characterized in that the temperature and / or the radical concentration is detected in such zones (8) which are monitored simultaneously by at least two detectors wherein said radiation sensed by the detectors (6) arriving from zones (8) along discret radiation directions (7), is spectrally analysed, in order to simultaneously detecting the band radiation intensities of multiple radicals and projected on a photon-sensitive detection-matrix, comprising a number of columns corresponding with the number of radiation directions and a number of lines corresponding with the fineness of the spectral analysis and wherein the detectors transmit signals corresponding with the detected radiation intensities through connections for their evaluation to an evaluation computing unit.

2. A method according to claim 1, characterized in that the radiation intensities of bandfree wavelength ranges together with the radiation intensity of band radiation are also detected.

3. A method according to claims 1 and 2, characterized in that the radiation spectrum is sensed by detectors comprising a beam angle of essentially 90°.

4. A method according to claims 1 to 3, characterized in that the detectors sense integral radiation intensities along various radiation directions.

5. A method according to claims 1 to 4, characterized in that the radiation spectrum is evaluated tomographically.

6. A method according to claims 1 to 5, characterized in that dust and / or soot particle concentrations are determined within and outside of the zones.

7. A method according to claims 1 to 6, characterized in that additionally the radiation of a reference radiator is detected.

8. Use of the method according to claims 1 to 7, for the detection of temperature and / or radical concentration within an incineration chamber or within a reactor.

9. Device for determining characteristic features of processes that form radicals wherein the radiation intensities of band radiation of multiple radicals is detected, characterized in that at least two detectors are installed for the detection of radiation of zones (8), which, along discrete radiation directions, can be monitored simultaneously by the detectors, that the detectors comprise a spectrometer each for spectrally analysing the arriving radiation and a photon-senvitive detection matrix, wherein each detection matrix comprises a number of columns corresponding with the number of radiation directions and a number of lines corresponding with the fineness of the spectral analysis and comprising an evaluation computing unit (10) for temperature and / or radical concentration within the zones (8), which are connected to the detectors.

## Revendications

1. Une méthode pour déterminer des propriétés caractéristiques des procédés formants des radicals par laquelle les intensités du rayonnement des bandes des radicals nombreux sont détectées, caractérisé en ce que la température et / ou les concentrations des radicals sont detéctées dans telles zones (8), quelles sont simultanément détectées par au moins deux détecteurs, à l'occasion de quoi ledit rayonnement, détecté par les détecteurs (6), arrivant des zones (8) le long des directions du rayonnement définies (7), est analysé spectrale pour détecter simultanément les intensités du rayonnement des bandes des radicals nombreux et projeté sur une matrice sensitive pour des photons, montrant un nombre des fentes correspondant au nombre des directions du rayonnement et un nombre des lignes correspondant à la finesse de l'analyse spectrale et à l'occasion de quoie les détecteurs transmettent des signals correspondant à l'intensités du rayonnement détectée par des conduites à un ordinateur pour leur évaluation.

2. Une méthode selon la revendication 1, caractérisé en ce que aussi l'intensité du rayonnement des gammes d' ondes exempt de bandes est évaluée avec l'intensité du rayonnement des bandes.

3. Une méthode selon les revendication 1 et 2, caractérisé en ce que le spectre du rayonnement est détecté avec des détecteurs, montrant un angle de divergence de 90 degrés.

4. Une méthode selon les revendication 1 à 3, caractérisé en ce que les détecteurs détectent des intensités integrales le long des directions du rayonnement différentes.

5. Une méthode selon les revendications 1 à 4, caractérisé en ce que le spectre du rayonnement est évalué tomographique.

6. Une méthode selon les revendications 1 à 5, caractérisé en ce que des concentrations, de la poussiére et de la suie sont découvries an dedans des et en dehors des zones (8).

7. Une méthode selon les revendications 1 à 6, caractérisé en ce que le rayonnement d' un èmetteur de rayonnement de référence est détecté supplémentaire.

8. Uitilisation de la méthode selon les revendications 1 à 7, pour la détermination de la temperature et / ou la concentration des radical dans un chambre de combustion ou un réacteur.

9. Appareil pour la détermination des propriétés charactéristique des procédés formant des radicals, par lequelle les intensités du rayonnement de bandes des radicals nombreux sont détectées, caractérisé en ce que au moins deux détecteurs (6) sind installés pour la détection du rayonnement dans des zones (8), quelles, le long des directions du rayonnement définies (7), sont simultanément détectées par les détecteurs, que les détecteurs montrent respectivement un spectrométre pour l'analyse spectrale du rayonnement arrivant et une matrice sensitive pour des photons à l'occasion de quoie chaque matrice montre un nombre des fentes correspondant au nombre des directions du rayonnement et un nombre des lignes correspondant à la finesse de l'analyse spectrale et un ordinateur (10) pour évaluer la température et/ou la concentration des radicals dans les zones (8), quel est lié par des conduites avec les détecteurs.
